# FASCICULE DE BREVET EUROPEEN

(11) **EP 0 653 157 B1**
(45) Date de publication et mention de la délivrance du brevet: **17.03.1999**
(21) Numéro de dépôt: 94402524.6
(22) Date de dépôt: 08.11.1994
(51) Int. Cl.: A01M 7/00, F04D 23/00

(54) **Dispositif pour produire un courant d'air ayant une forme aplatie en section transversale**
Anordnung zum Fördern einer Luftströmung mit einer flachen Gestalt
Device to produce an air flow having a flattened cross section

(30) Priorité: 10.11.1993 FR 9313437
(43) Date de publication de la demande: 17.05.1995
(73) Titulaire: EXEL INDUSTRIES, 51200 Epernay (FR)
(72) Inventeur: Ballu, Patrick Jean-Marie, F-51100 Reims (FR)
(74) Mandataire: Colas, Jean-Pierre

(56) Documents cités:
- FR-A- 1 314 453
- GB-A- 2 227 399
- US-A- 3 164 324
- US-A- 3 252 656
- US-A- 4 026 469
- PATENT ABSTRACTS OF JAPAN vol. 14, no. 14 (C-674) 12 Janvier 1990 & JP-A-01 257 414 (NAKADE KOICHI) 13 Octobre 1989

## Description

La présente invention est relative à un dispositif apte à produire un courant d'air ayant en section transversale une forme aplatie, notamment pour projeter un produit de traitement sur le sol ou sur des végétaux.

Pour envoyer un courant d'air chargé de produit de traitement vers le sol ou vers des végétaux, on utilise habituellement deux types d'appareillages. Un premier type (brevets US-A-3 252 656 GREENWOOD, FR-A-1 314 453 BERTHOUD) comprend un ventilateur hélicoïdal qui projette un jet d'air à grand débit et vitesse modérée dans la direction de l'axe de rotation de son hélice. Ce jet d'air peut être dévié à l'aide de déflecteurs appropriés pour être transformé en un courant d'air à section transversale aplatie, mais, si on désire créer une nappe d'air en déplacement parallèle, de grande largeur, il est nécessaire de prévoir plusieurs ventilateurs ayant chacun ses déflecteurs.

Un deuxième type d'appareillage (brevets US-A-4 026 469 FRANKEL, US-A-2 925 222 SPRENG) pour produire un courant d'air comprend un compresseur centrifuge unique, qui débite de l'air à débit modéré, sous une pression relativement élevée. L'air ainsi comprimé est acheminé par des conduits convenables jusqu'à des buses qui produisent des jets d'air à grande vitesse et faible section initiale. Les jets d'air produits, qui peuvent être de forme aplatie en section transversale, et qui peuvent être disposés tous dans un même plan, pénètrent dans l'air, et aussi dans le feuillage des végétaux, à la façon de poignards, c'est-à-dire que l'air se déplace à grande vitesse dans l'axe de chaque jet, mais cet air a une vitesse quasi-nulle entre les jets. Il en résulte une mauvaise répartition du produit de traitement.

Dans le document US-A-3 164 324, BRUINSMA, on a décrit un appareil qui contient à la fois un compresseur centrifuge et des ventilateurs hélicoïdaux. Le compresseur centrifuge sert seulement à produire un jet d'air à grande vitesse qui sert à déchiqueter un jet de liquide de traitement en fines gouttelettes, qui sont injectées, à l'aide du même jet d'air à grande vitesse, selon l'axe du courant d'air créé par le ventilateur hélicoïde. Cette solution compliquée ne permet pas d'échapper aux inconvénients des appareillages à ventilateurs hélicoïdes.

Le document GB-A-2.227.399 fait appel à une autre technique, qui est celle du venturi. Selon cette technique, un jet d'air à grande vitesse est injecté, par injecteur formé d'une buse ou analogue, axialement à l'entrée d'un diffuseur formé d'un conduit convergent-divergent. Le jet d'air communique son énergie à l'air qui se trouve dans le diffuseur, si bien qu'on peut obtenir un écoulement d'air à grand débit et vitesse modérée, analogue à celui que fournit un ventilateur hélicoïdal.

Pour obtenir un courant d'air de forme aplatie, il est prévu, selon le document qu'on vient de citer, d'utiliser soit un diffuseur unique, rectiligne en section transversale, et de grande longueur, alimenté par une série d'injecteurs montés sur un collecteur parallèle au diffuseur, soit une série d'ensembles injecteur-diffuseur, dans lesquels chaque diffuseur est à section fermée, ovale ou circulaire, et associé à un injecteur unique, relié au collecteur par un conduit.

La première solution est connue pour ne donner de bons résultats que dans une gamme de débits étroite, et la seconde solution aboutit à une structure complexe et lourde, et à un montage compliqué.

La présente invention a pour but de fournir un dispositif qui procure les performances d'un système à plusieurs ensembles comprenant chacun un diffuseur à section fermée associée à un injecteur unique, et qui puisse en même temps être construit de façon simple et peu coûteuse.

Pour obtenir ce résultat, l'invention fournit un dispositif pour produire un courant d'air ayant une forme aplatie en section transversale, ce dispositif comprenant:
- au moins deux diffuseurs, formés chacun d'un conduit convergent-divergent ouvert à ses deux extrémités, ces diffuseurs étant placés dans le plan de la plus grande dimension de la section transversale du courant d'air qu'on désire obtenir, et
- un injecteur associé à chaque diffuseur, à peu près coaxial au conduit formant le diffuseur, et situé dans sa partie convergente en étant dirigé vers la partie divergente, ledit injecteur étant relié par des moyens d'amenée d'air comprimé à un compresseur centrifuge de telle façon que l'air comprimé produit par le compresseur et projeté par l'injecteur met en mouvement, ou accélère, l'air se trouvant dans le diffuseur par effet Venturi,
   dispositif qui comprend un caisson qui peut être alimenté en air comprimé par le compresseur centrifuge et constitue un collecteur, ce caisson étant traversé de façon étanche par des passages séparés, situés dans le plan de la plus grande dimension de la section transversale du jet d'air à produire, ces passages étant de forme convergente-divergente et constituant les diffuseurs, et les injecteurs étant placés à l'intérieur des passages et étant reliés à l'intérieur du caisson par des conduits d'alimentation.

La structure en caisson procure, comme il est connu, une grande rigidité pour un poids très inférieur à celui de structures plus complexes de même rigidité. La forme particulière du caisson traversé par des passages peut être obtenue, sans difficulté particulière, par les techniques actuelles de moulage-soufflage sous pression de matières plastiques.

Avantageusement, les conduits d'alimentation des injecteurs comprennent un collecteur auxiliaire, qui alimente chacun des injecteurs par un conduit relié, par d'autres conduits, à l'intérieur du caisson qui forme un collecteur principal.

L'ensemble du dispositif est ainsi composé par assemblage de deux pièces de grandes dimensions mais d'obtention facile, le caisson et le collecteur, et de pièces annexes de faible coût telles que les conduits précités.

Dans le cas d'un dispositif comportant des moyens de pulvérisation de produit de traitement, disposés à proximité des sorties des diffuseurs, dans le sens de déplacement de l'air, il est avantageux de prévoir que ces moyens sont également portés par le caisson. Avantageusement, ces moyens sont des gicleurs placés dans des cavités du caisson.

Suivant une réalisation plus avantageuse encore, les moyens de pulvérisation comprennent une pièce d'éclatement qui a un bord arrondi tourné vers l'amont de l'écoulement gazeux et une arête à angle vif dirigée à l'opposé, et un moyen d'alimentation en liquide de traitement apte à créer, sur au moins une partie de la pièce d'éclatement, un revêtement sensiblement continu dudit liquide, la pièce d'éclatement et le moyen d'alimentation étant placés dans la région de la sortie de l'injecteur et du col du convergent-divergent formé par le passage.

Dans le cas qu'on vient d'évoquer, et si les moyens de pulvérisation sont reliés séparément à un conduit d'alimentation commun, pour une meilleure protection, il est encore avantageux de prévoir que ce conduit est logé au moins en partie dans une rainure du caisson, et/ou que ce conduit passe au moins en partie à l'intérieur du caisson et/ou d'un conduit d'amenée d'air comprimé dans le caisson.

Ces structures mettent à profit la rigidité du caisson pour un maximum d'allégement et de simplification de l'ensemble sans compliquer exagérément la fabrication du caisson.

Si le dispositif est placé dans un appareillage fixe, l'air dans le diffuseur est immobile quand l'injecteur n'est pas en action. Si le dispositif est monté sur un véhicule, l'air dans le diffuseur peut se déplacer à faible vitesse en fonction de la vitesse du véhicule, du vent, et de l'orientation du diffuseur. Cette vitesse est habituellement relativement faible.

Suivant un mode de réalisation intéressant pour réaliser des courants d'air puissants, un ventilateur hélicoïde est associé au diffuseur de façon à créer dans celui-ci un écoulement d'air qui sera accéléré par l'effet Venturi quand l'injecteur sera en action. On crée ainsi un effet de "gavage".

L'invention va maintenant être décrite de façon plus détaillée à l'aide d'un exemple pratique illustré à l'aide des dessins parmi lesquels :
La figure 1 est une vue perspective schématique d'un appareillage de pulvérisation équipé de dispositifs selon l'invention pour créer des courants d'air en forme de nappe verticale.
La figure 2 est une vue analogue à la figure 1 mais avec un dispositif conforme à l'invention, installé pour produire un courant d'air en forme de nappe horizontale.
La figure 3 est une vue perspective schématique d'un panneau soufflant unitaire conforme à l'invention.
La figure 4 est une vue en plan, partiellement en coupe selon le plan IV-IV de la figure 3, d'un panneau soufflant.
Les figures 5 et 6 sont des coupes transversales selon les lignes V-V et VI-VI de la figure 4.
La figure 7 est un schéma en perspective montrant la forme d'un diffuseur.
La figure 8 est une vue analogue à la figure 3, d'une variante.
La figure 9 est une vue partielle agrandie de la coupe de la figure 4, avec un autre dispositif de pulvérisation de liquide de traitement.

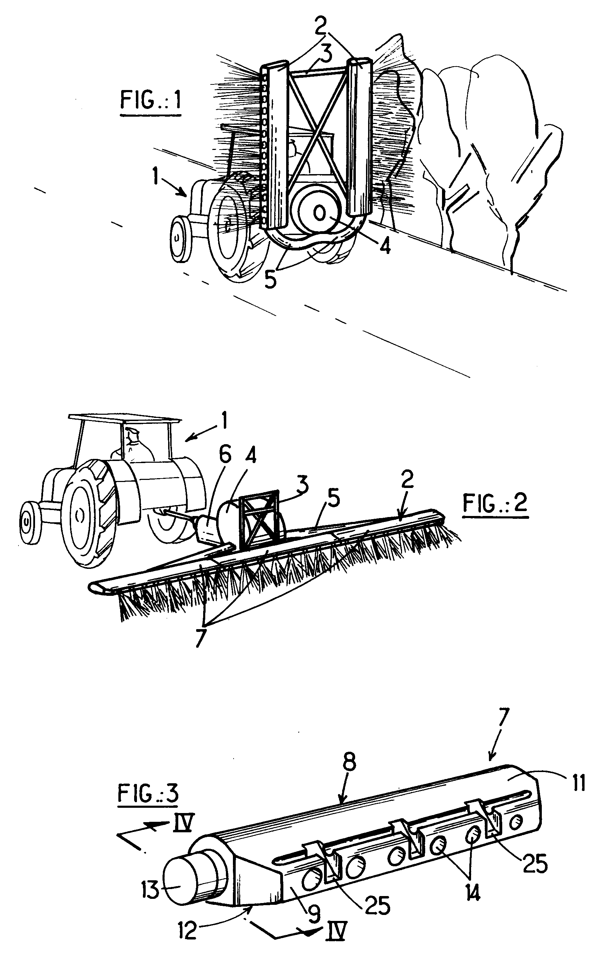

La figure 1 montre un tracteur 1 qui porte deux rampes de projection 2 disposées verticalement à gauche et à droite, supportées par un portique 3, un compresseur centrifuge 4 monté à l'arrière du tracteur, et des conduits 5 reliant le compresseur à chacune des rampes.

La figure 2 montre une rampe de projection 2 montée horizontalement sur une remorque 6 attelée au tracteur 1 et pourvue d'un portique 3. Le compresseur centrifuge 4 est également monté sur la remorque, et il est relié à la rampe par des conduits 5.

On notera que les figures 1 et 2 ne donnent que des exemples non limitatifs. Les rampes peuvent avoir bien d'autres dispositions et orientations, verticales, horizontales ou obliques, selon les problèmes posés.

Chaque rampe 2 est constituée d'un certain nombre de panneaux soufflants 7, alignés, qu'on va maintenant décrire plus en détail à l'aide des figures 3 à 6.

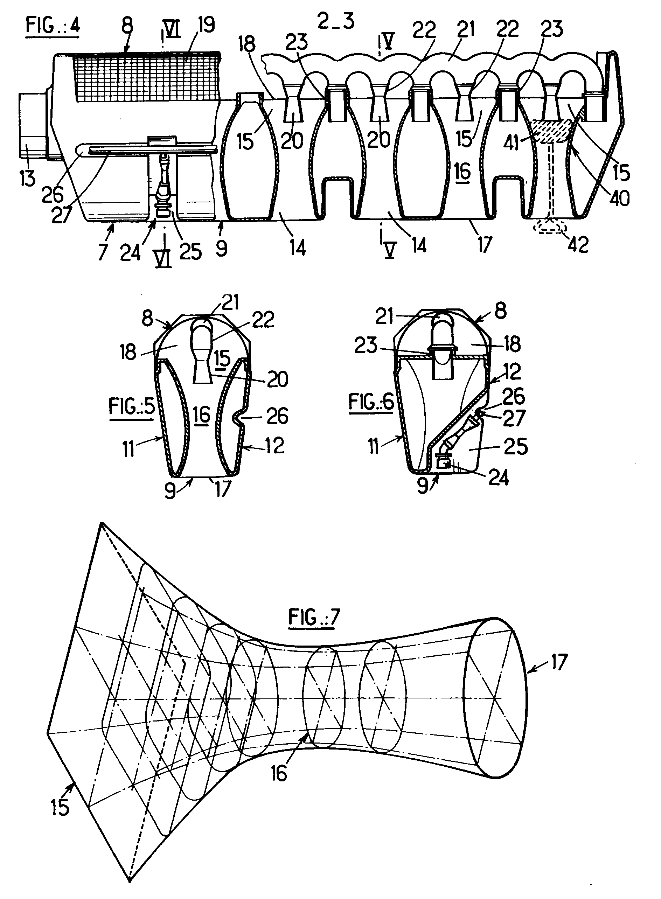

Chaque panneau 7 a la forme d'un caisson allongé et aplati, avec un premier bord ou bord d'admission, 8, en forme de demi-cylindre, un bord opposé, ou bord de projection, 9, plus mince, et des bords droit et gauche 11, 12 sensiblement plans et convergeant vers le bord mince 9, l'ensemble évoquant un peu une partie d'aile d'avion (Voir notamment les figures 5 et 6).

On notera que les dénominations "droit" et "gauche" sont purement arbitraires : Si la rampe de projection est verticale et perpendiculaire au sens de la marche, comme dans la figure 1, un des bords droit ou gauche est en avant dans le sens de la marche du tracteur, et l'autre est en arrière. Si la rampe de projection est horizontale, comme dans la figure 2, un des bords droit ou gauche est situé au-dessus, et l'autre au-dessous.

Le panneau 7 constitue un caisson étanche, pourvu à une de ses extrémités d'un embout cylindrique 13, qui permet de le raccorder de façon étanche à un caisson voisin, ou à une arrivée d'air comprimé, et en même temps de modifier son orientation par pivotement autour de l'axe de l'embout 13. Si plusieurs panneaux sont placés en série, un embout 13 est prévu à chacune des extrémités des panneaux intermédiaires.

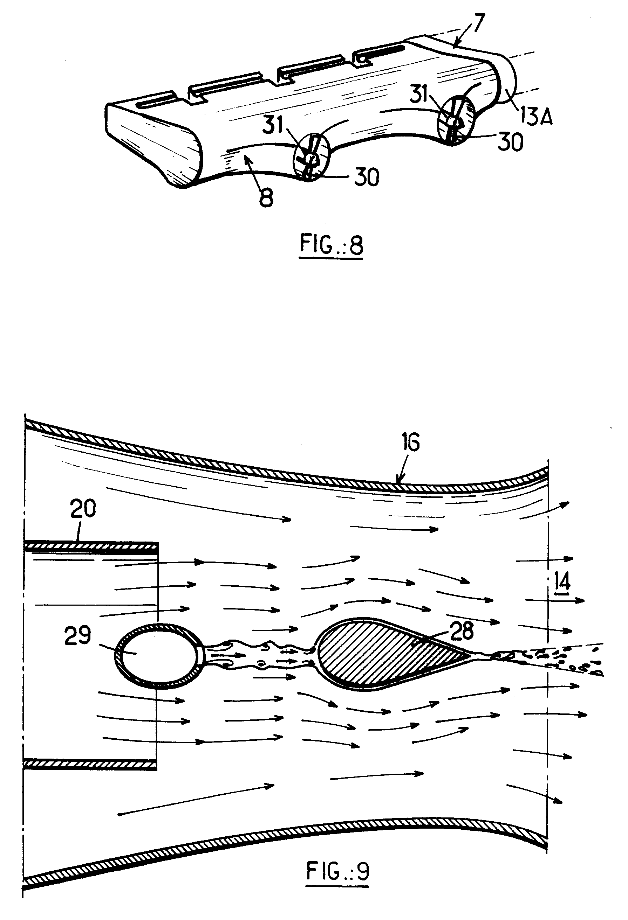

Suivant un mode de réalisation préféré, il n'y a pas d'embout 13 à proprement parler, mais les extrémités de deux caissons successifs sont ouvertes et liées l'une à l'autre à l'aide de manchons, ou plutôt en prévoyant qu'elles ont une section de taille légèrement différente si bien que l'extrémité la plus petite est enfoncée, avec étanchéité, dans l'autre. A la figure 8, on a représenté un caisson ayant une extrémité élargie 13A, mais une disposition différente est possible. Bien entendu, le mode de liaison est indépendant du dispositif de gavage également montré à la figure 8 et décrit plus loin.

Une telle réalisation permet des fabrications simplifiées. Par exemple, on peut constituer un caisson de grande longueur par assemblage de tronçons standardisés. On peut former dans des pièces de grande longueur, puis les couper pour former des tronçons de la longueur désirée.

Un certain nombre de passages 14, parallèles entre eux, débouchent sur le bord de projection 9. Ils présentent une forme convergente-divergente. Comme le montre la figure 7, leur section transversale varie progressivement d'une forme rectangulaire à leur partie d'admission 15 à une forme circulaire au niveau de leur col 16 où l'aire de la section est minimale. La partie de sortie 17, qui rejoint le bord de projection 9, a une section transversale de forme circulaire. Le diamètre du passage augmente depuis le col jusqu'au bord de projection. Une telle forme permet par comparaison avec une forme circulaire d'un bout à l'autre, d'augmenter la section d'admission sans changer l'écart entre passages voisins.

La disposition et/ou la forme des passages peuvent être différentes de celle qui est décrite, en fonction de la nature des problèmes posés. En particulier, les passages 14 peuvent ne pas être parallèles mais converger vers un point situé en avant, dans le sens du déplacement d'air, pour une action plus concentrée à distance du dispositif. Ils peuvent aussi diverger, à partir d'un point situé en arrière, dans le sens du déplacement d'air, pour une action plus élargie. D'autre part, la partie de sortie 17 peut aussi avoir une forme rectangulaire ou aplatie, par exemple pour des raisons de robustesse ou de facilité de construction, ou pour obtenir une structure particulière des jets d'air.

Il est important que les axes des jets d'air constituent ensemble une surface continue. Cette surface est normalement un plan, mais dans des cas particuliers, par exemple pour traiter des arbustes ayant une forme particulière, on peut concevoir qu'elle ait une autre forme.

La partie d'admission 15 des passages 14 débouche dans une chambre d'admission 18 reliée à l'extérieur par un grillage 19 qui constitue le bord d'admission 8.

La partie du volume intérieur du caisson 7 qui n'est pas occupée par les passages 14 ou la chambre d'admission 18 constitue un collecteur principal, rempli d'air comprimé pendant le fonctionnement du dispositif.

Des injecteurs 20 sont placés de façon à être coaxiaux aux passages 14. Ils sont situés dans la partie d'admission 15 de chaque passage 14, et dirigés vers le col 16.

Les injecteurs 20 sont reliés au collecteur principal, qui les alimente en air comprimé, par l'intermédiaire d'un collecteur auxiliaire 21 placé dans la chambre d'admission 18.

Le collecteur auxiliaire 21 s'étend sur à peu près toute la longueur de la chambre d'admission. Il est relié à chaque injecteur 20 par un conduit rectiligne 22, coaxial au passage 14, et d'autres conduits rectilignes 23 parallèles aux premiers conduits 22 relient le collecteur auxiliaire au collecteur principal. Les conduits 23 sont disposés entre deux passages 14 adjacents. Comme le montre la figure 4, on obtient ainsi une structure symétrique très rigide, robuste et une alimentation régulièrement répartie. On peut toutefois prévoir d'autres modes d'exécution. Par exemple, chaque injecteur peut être relié directement au collecteur principal par un tube coudé à 180°.

A proximité du bord de projection 9 du caisson 7 sont placés des gicleurs 24 pour un produit de traitement liquide. Ces gicleurs sont du type qui produit une nappe aplatie de gouttelettes de liquide, cette nappe étant en forme de V dont le sommet se trouve sur le gicleur. Les gicleurs 24 sont situés dans le plan qui contient les axes des passages 14, et les gicleurs sont disposés de façon à produire une nappe de gouttelettes qui est essentiellement dans le même plan. Il est prévu un gicleur par deux passages 14. On a constaté qu'on obtient, à faible distance du caisson 7, une répartition homogène du produit de traitement dans le courant d'air obtenu avec l'ensemble des diffuseurs 14 du caisson, fonctionnant ensemble. Il est cependant possible de prévoir une disposition différente des gicleurs, par exemple des gicleurs placés en alternance avec les sorties 17 des diffuseurs, ou en deux lignes situées de chaque côté de la ligne des sorties 17.

Les gicleurs 24 sont placés dans des cavités 25 prévues dans un des bords droit ou gauche 11, 12 du caisson 7. Le même bord présente une rainure 26 perpendiculaire à la direction des passages 14, et dans laquelle est logé un conduit 27 d'alimentation des gicleurs en produit de traitement. Les gicleurs 24 sont ainsi d'accès facile, tout en étant protégés des chocs.

Dans une variante, les gicleurs sont du type à disque tournant décrit dans le document FR-A-2.497.439 au nom de la demanderesse. Ces gicleurs produisent une nappe de gouttelettes projetées par la force centrifuge dans un secteur angulaire du plan du disque tournant. Ici le disque est disposé de façon à produire une nappe de gouttelettes à peu près tangente à la nappe d'air à la sortie des diffuseurs.

Dans une autre variante, les gicleurs sont des disques tournants dont le plan est perpendiculaire à la direction d'écoulement d'air. Dans le cas d'un gicleur à disque tournant, il sera placé de préférence au-delà de la cavité 25 dans le sens de l'écoulement d'air, ou même dans cet écoulement lui-même.

Au voisinage de l'extrémité du caisson, la rainure 26 s'interrompt, et le conduit 27 pénètre à l'intérieur du caisson pour traverser le plan de jonction entre deux caissons adjacents. Le conduit 27 est ainsi protégé dans la zone de la jonction.

Dans une autre variante intéressante, illustré à la figure 9, on prévoit un dispositif de pulvérisation de liquide du type décrit dans la demande de brevet français 94.07659, non publiée au moment du dépôt de la présente demande.

Plus précisément, il est prévu, dans la région de la sortie 17 de l'injecteur 20 et du col 16 du Venturi formé par le passage 14, une "pièce d'éclatement" 28 qui a un bord arrondi tourné vers l'amont de l'écoulement gazeux et une arête à angle vif dirigée à l'opposé, et un moyen 29 d'alimentation en liquide de traitement apte à créer, sur au moins une partie de la pièce d'éclatement un revêtement de liquide de traitement sensiblement continu.

Dans l'exemple décrit à la figure 9, le moyen d'alimentation 29 est un tube qui est relié au conduit 27 et présente des orifices convenablement disposés. Le tube 29 traverse la paroi du passage 14, il est monté en prolongement du conduit 27, qui est alors entièrement à l'intérieur du caisson, et il n'y a ni cavité 25 ni rainure 26. D'autres réalisations sont possibles, conformément à la demande de brevet français 94.07659 précitée, qui est incorporée à la présente demande à titre de référence.

Dans une variante illustrée à la figure 8, le bord d'admission 8 n'est pas constitué par un grillage, mais par une tôle pleine dans laquelle sont disposés de petits ventilateurs hélicoïdes 30 disposés pour envoyer de l'air dans la chambre d'admission 18, et créer dans la partie d'admission 15 des passages 14 un courant d'air qui sera accéléré par effet Venturi sous l'action du jet d'air produit par l'injecteur 20. On obtient ainsi un effet de "gavage" qui améliore sensiblement le rendement des ensembles diffuseur-injecteur.

La disposition et le nombre des ventilateurs 30 sont, bien entendu, à adapter au problème posé et à la forme du dispositif. Les moteurs d'entraînement 31 des ventilateurs 30 peuvent être des moteurs électriques ou hydrauliques. Les ventilateurs peuvent également être entraînés par un arbre de transmission relié à un moteur commun, qui peut être celui du véhicule porteur.

Sur les dessins, on a représenté le panneau soufflant 7 comme d'une seule pièce, d'assez grandes dimensions. La technique actuelle permet de faire de telles pièces sans difficultés majeures. Toutefois, il peut être préférable de constituer le panneau soufflant par assemblage d'éléments unitaires, de préférence identiques, correspondant chacun à un seul passage 14 ou à un petit nombre de passages. On peut ainsi facilement adapter en usine la dimension du panneau soufflant à la demande.

La structure modulaire du dispositif permet d'adapter rapidement ses dimensions aux besoins. Toutefois, au cas où on désire momentanément modifier le nombre de passages 14 en activité, il est avantageux de prévoir des obturateurs de forme calculée pour obturer au moins un injecteur, en étant maintenus en place par la partie convergente du passage correspondant.

On a représenté à la figure 4, en tirets, un tel obturateur 40 constitué d'une masse 41 de matière plastique déformable qui vient obturer l'injecteur 20 en étant maintenu par le convergent du Venturi. Une poignée 42 sert à la mise en place et à l'enlèvement de l'obturateur. Dans le cas représenté sur la figure, la masse 41 obture également le passage 14, ce qui est avantageux mais non indispensable.

## Revendications

1. Dispositif pour produire un courant d'air ayant une forme aplatie en section transversale, ce dispositif comprenant :
- au moins deux diffuseurs, formés chacun d'un conduit (14) convergent-divergent ouvert à ses deux extrémités, ces diffuseurs étant placés dans le plan de la plus grande dimension de la section transversale du courant d'air qu'on désire obtenir, et
- un injecteur (20) associé à chaque diffuseur (14), à peu près coaxial au conduit formant le diffuseur, et situé dans sa partie convergente en étant dirigé vers la partie divergente, ledit injecteur (20) étant relié par des moyens (5) d'amenée d'air comprimé à un compresseur centrifuge (4) de telle façon que l'air comprimé produit par le compresseur et projeté par l'injecteur met en mouvement, ou accélère, l'air se trouvant dans le diffuseur par effet Venturi,
caractérisé en ce qu'il comprend un caisson (7) qui peut être alimenté en air comprimé par le compresseur centrifuge et constitue un collecteur, ce caisson étant traversé de façon étanche par des passages (14) séparés, situés dans le plan de la plus grande dimension de la section transversale du jet d'air à produire, ces passages étant de forme convergente-divergente et constituant les diffuseurs, et les injecteurs (20) sont placés à l'intérieur des passages (14) et sont reliés à l'intérieur du caisson (7) par des conduits d'alimentation.

2. Dispositif selon la revendication 1, caractérisé en ce que les conduits d'alimentation des injecteurs (20) comprennent un collecteur auxiliaire (21), qui alimente chacun des injecteurs (20) par un conduit (22), relié, par d'autres conduits (23), à l'intérieur du caisson (7) qui forme un collecteur principal.

3. Dispositif selon l'une des revendications 1 ou 2, et comportant des moyens (24, 28, 29) de pulvérisation de produit de traitement, disposés à proximité des sorties (17) des diffuseurs (14), dans le sens de déplacement de l'air, caractérisé en ce que ces moyens (24; 28, 29) sont également portés par le caisson (7).

4. Dispositif selon la revendication 3, caractérisé en ce que les moyens de pulvérisation sont des gicleurs (24) placés dans des cavités (25) du caisson (7).

5. Dispositif selon la revendication 3, caractérisé en ce que les moyens de pulvérisation comprennent une pièce d'éclatement (28) qui a un bord arrondi tourné vers l'amont de l'écoulement gazeux et une arête à angle vif dirigé à l'opposé, et un moyen d'alimentation (29) en liquide de traitement apte à créer, sur au moins une partie de la pièce d'éclatement, un revêtement sensiblement continu dudit liquide, la pièce d'éclatement et le moyen d'alimentation étant placés dans la région de la sortie de l'injecteur (20) et du col (16) du convergent-divergent formé par le passage (14).

6. Dispositif selon l'une des revendications 3 à 5, et dans lequel les moyens de pulvérisation (24; 28, 29) sont reliés séparément à un conduit d'alimentation commun (27), caractérisé en ce que ce conduit est logé au moins en partie dans une rainure (26) du caisson (7).

7. Dispositif selon l'une des revendications 3 à 6, et dans lequel les moyens de pulvérisation (24; 28, 29) sont reliés séparément à un conduit d'alimentation commun (27), caractérisé en ce que ce conduit passe au moins en partie à l'intérieur du caisson et/ou d'un conduit d'amenée d'air comprimé dans le caisson.

8. Dispositif selon l'une des revendications 1 à 7, caractérisé en ce qu'au moins un passage (14) traversant le caisson (7) présente, dans la zone d'admission de sa partie convergente, en section droite, une forme générale rectangulaire, et dans la zone de sortie de sa partie divergente, une section globalement circulaire.

9. Dispositif selon l'une des revendications 1 à 8, caractérisé en ce qu'au moins un ventilateur hélicoïde (30) est associé à au moins un diffuseur de façon à créer dans celui-ci un écoulement d'air qui sera accéléré par effet Venturi quand l'injecteur sera en action, et à produire un effet de gavage.

10. Dispositif selon l'une des revendications 1 à 8, caractérisé en ce qu'il est constitué comme un assemblage de caissons unitaires reliés les uns aux autres de façon étanche.

11. Dispositif selon la revendication 10, caractérisé en ce que les caissons adjacents sont ouverts à leurs extrémités qui se font face, et reliés par manchons, ou, de préférence, par emmanchement.

12. Dispositif selon l'une des revendications 1 à 11, caractérisé en ce qu'il est prévu des obturateurs de forme calculée pour obturer au moins un injecteur (20), en étant maintenus en place par la partie convergente du passage (14) correspondant.

## Claims

1. A device for producing an air stream having a flattened shape in transverse section, this device comprising:
- at least two diffusers, each one formed of a convergent-divergent pipe (14) open at both ends, these diffusers being placed in the plane of the longest dimension of the transverse section of the air stream which it is desired to obtain, and
- an injector (20) associated with each diffuser (14), more or less coaxial with the pipe forming the diffuser, and situated in its convergent part, being directed toward the divergent part, said injector (20) being connected by compressed-air conveying means (5) to a centrifugal compressor (4) such that the compressed air produced by the compressor and sprayed by the injector sets the air located in the diffuser into motion or accelerates it, by a venturi effect,
characterized in that it comprises a box structure (7) which can be fed with compressed air by the centrifugal compressor and constitutes a manifold, said box structure having passing through it in leaktight fashion separate passages (14) which are situated in the plane of the longest dimension of the transverse section of the air jet to be produced, said passages being of convergent-divergent shape and constituting the diffusers, and said injectors (20) being placed inside the passages (14) and being connected to the inside of the box structure (7) by feed pipes.

2. The device of claim 1, characterized in that the feed pipes of the injectors (20) comprise an auxiliary manifold (21), which feeds each of the injectors (20) via a pipe (22) connected, via other pipes (23), to the inside of the box structure (7) which forms a main manifold.

3. The device of one of claims 1 or 2, and comprising means (24;28;29) for atomizing treatment product, these means being located close to the outlets (17) of the diffusers (14), in the direction of movement of the air, characterized in that said means (24;28;29) are also borne by the box structure (7).

4. The device of claim 3, characterized in that the atomization means are spray heads (24) placed in cavities (25) of the box structure (7).

5. The device of claim 3, characterized in that the atomization means comprise a break-up piece (28) which has a rounded edge pointing toward upstream of the gaseous flow and a ridge with a sharp angle pointing in the opposite direction, and a means (29) for feeding with treatment liquid capable of creating, over at least part of the break-up piece, a substantially continuous coating of said liquid, the break-up piece and the feed means being placed in the region of an outlet of the injector (20) and of a part (16) of minimal cross-section of the convergent-divergent formed by the passage (14).

6. The device according to one of claims 3-5, and wherein the atomization means (24;28;29) are separately connected to a common feed pipe (27) characterized in that this pipe is housed, at least in part, in a groove (26) of the box structure (7).

7. The device according to one of claims 3-6, and wherein the atomization means (24;28;29) are separately connected to a common feed pipe (27), characterized in that this pipe which passes, at least in part, inside the box structure and/or a pipe for supplying compressed air in the box structure.

8. The device according to one of claims 1-7, characterized in that at least one passage (14) passing through the box structure (7) exhibits an overall rectangular shape in cross-section in an intake zone of its convergent part, and exhibits an overall circular section in an outlet zone of its divergent part.

9. The device according to one of claims 1-8, characterized in that at least one helical blower (30) is associated with at least one diffuser so as to create in the latter an air flow which will be accelerated by venturi effect when the injector comes into action, and so as to produce a supercharging effect.

10. The device according to one of claims 1-8, characterized in that said device is made up as an assembly of unitary box structures connected to one another in leaktight fashion.

11. The device of claim 10, characterized in that the adjacent box structures are open at their ends which face each other, and connected together by sleeves or, preferably, by fitting into each other.

12. The device of one of claims 1-11, characterized in that stoppers are provided which have a shape designed to close off at least one injector (20), being held in place by the convergent part of the corresponding passage (14).

## Patentansprüche

1. Vorrichtung zum Erzeugen eines Luftstromes mit einem abgeflachten Strömungsquerschnitt, wobei die Vorrichtung aufweist:
- mindestens zwei Diffusoren, die jeweils aus einer konvergent-divergenten, an ihren beiden Enden offenen Leitung (14) bestehen, wobei diese Diffusoren in der Ebene der größtem Abmessung des Querschnittes des zu erzeugenden Luftstromes angeordnet sind, und
- einen jedem Diffusor (14) zugeordneten Injektor (20), der nahezu koaxial zu der den Diffusor bildenden Leitung verläuft und in seinem divergenten Abschnitt angeordnet ist sowie auf den divergenten Abschnitt hin gerichtet ist, wobei der Injektor (20) durch Druckluft-Zuführmittel (5) mit einem Zentrifugalverdichter (4) so verbunden ist, daß die von dem Verdichter erzeugte und von dem Injektor ausgestoßene Druckluft die sich im Diffusor befindende Luft durch den Venturi-Effekt in Bewegung versetzt oder beschleunigt,
dadurch gekennzeichnet, daß sie einen Kasten (7) aufweist, der von dem Zentrifugalverdichter mit Luft beaufschlagt wird und einen Kollektor bildet, wobei dieser Kasten von getrennten Kanälen (14) abgedichtet durchquert wird, welche in der Ebene der größten Abmessung des Querschnittes des zu erzeugenden Luftstrahles angeordnet sind, wobei diese Kanäle eine konvergent-divergente Form haben und die Diffusoren bilden und die Injektoren (20) im Inneren der Kanäle (14) angeordnet und mit dem Inneren des Kastens (7) durch Zufuhrleitungen verbunden sind.

2. Vorrichtung nach Anspruch 1, dadurch gekennzeichnet, daß die Zufuhrleitungen der Injektoren (20) einen Hilfskollektor (21) aufweisen, der jeden der Injektoren (20) durch eine Leitung (22) speist, die über weitere Leitungen (23) mit dem Inneren des einen Hauptkollektor bildenden Kastens (7) verbunden ist.

3. Vorrichtung nach Anspruch 1 oder 2, die mit Mitteln (24, 28, 29) zum Zerstäuben eines Behandlungsmittels versehen ist, welcher nächst der Auslässe (17) der Diffusoren (14) in Strömungsrichtung der Luft angeordnet sind, dadurch gekennzeichnet, daß diese Mittel (24; 28, 29) ebenfalls von dem Kasten (7) getragen werden.

4. Vorrichtung nach Anspruch 3, dadurch gekennzeichnet, daß die Zerstäubungsmittel Zerstäuberdüsen (24) sind, die in Hohlräumen (25) des Kastens (7) angeordnet sind.

5. Vorrichtung nach Anspruch 3, dadurch gekennzeichnet, daß die Zerstäubungsmittel einen Strömungsteiler (28) und ein Behandlungsflüssigkeits-Zuführmittel (29) aufweisen, von denen der Strömungsteiler eine abgerundete Vorderkante und eine spitzwinklige Hinterkante aufweist und das Behandlungsflüssigkeits-Zuführmittel so ausgebildet ist, daß es über zumindest einen Abschnitt des Strömungsteilers eine im wesentlichen kontinuierliche Flüssigkeitsschicht bildet, wobei der Strömungsteiler und das Zuführmittel in dem Bereich des Auslasses des Injektors (20) und des Halses (16) des konvergent-divergenten Kanales (14) angeordnet sind.

6. Vorrichtung nach einem der Ansprüche 3 bis 5, bei der die Zerstäubungsmittel (24; 28, 29) getrennt mit einer gemeinsamen Zuführleitung (27) verbunden sind, dadurch gekennzeichnet, daß diese Leitung zumindest teilweise in einer Nut (26) des Kastens (7) untergebracht ist.

7. Vorrichtung nach einem der Ansprüche 3 bis 6, bei der die Zerstäubungsmittel (24; 28, 29) getrennt mit einer gemeinsamen Zuführleitung (27) verbunden sind, dadurch gekennzeichnet, daß diese Leitung sich zumindest teilweise in das Innere des Kastens und/oder eine im Kasten angeordneten Druckluft-Zufuhrleitung hinein erstreckt.

8. Vorrichtung nach einem der Ansprüche 1 bis 7, dadurch gekennzeichnet, daß zumindest ein den Kasten (7) durchquerender Kanal (14) in dem Einlaßbereich seines konvergenten Abschnittes einen rechteckigen Querschnitt und im Auslaßbereich seines divergenten Abschnittes einen allgemein kreisförmigen Querschnitt aufweist.

9. Vorrichtung nach einem der Ansprüche 1 bis 8, dadurch gekennzeichnet, daß mindestens ein Schraubgebläse (30) mindestens einem Diffusor zugeordnet ist, um in diesem eine Luftströmung zu erzeugen, die bei Betrieb des Injektors durch den Venturi-Effekt beschleunigt wird, um eine Aufladungswirkung zu erzeugen.

10. Vorrichtung nach einem der Ansprüche 1 bis 8, dadurch gekennzeichnet, daß sie als Anordnung von Kasteneinheiten ausgebildet ist, die abgedichtet untereinander verbunden sind.

11. Vorrichtung nach Anspruch 10, dadurch gekennzeichnet, daß die benachbarten Kasteneinheiten an ihren einander zugewandten Enden offen und durch Muffen oder vorzugsweise durch Ineinanderstecken verbunden sind.

12. Vorrichtung nach einem der Ansprüche 1 bis 11, dadurch gekennzeichnet, daß sie mit Verschlüssen einer speziellen Form versehen ist, um mindestens einen Injektor (20) zu verschließen, indem sie durch den konvergenten Abschnitt des entsprechenden Kanals (14) gehalten werden.
